# FASCICULE DE BREVET EUROPEEN

(11) **EP 2 800 730 B1**
(45) Date de publication et mention de la délivrance du brevet: **11.12.2019**
(21) Numéro de dépôt: 13702102.8
(22) Date de dépôt: 03.01.2013
(51) Int. Cl.: C02F 1/52, C02F 1/24

(54) **APPAREIL DE COAGULATION/FLOCULATION POUR LE TRAITEMENT D'UN FLUX HYDRAULIQUE, ET PROCÉDÉ DE MISE EN OEUVRE**
GERINNUNGS-/FLOCKUNGSVORRICHTUNG ZUR BEHANDLUNG EINES HYDRAULISCHEN FLUSSES UND ANWENDUNGSVERFAHREN DAFÜR
COAGULATION/FLOCCULATION APPARATUS FOR THE TREATMENT OF A HYDRAULIC FLOW, AND IMPLEMENTATION PROCESS

(30) Priorité: 04.01.2012 FR 1250071
(43) Date de publication de la demande: 12.11.2014
(73) Titulaire: SUEZ International, 92040 Paris La Défense (FR)
(72) Inventeur: VION, Patrick, F-78800 Houilles (FR); GRAU, Guillem, F-92800 Puteaux (FR)
(74) Mandataire: IPAZ
(86) Numéro de dépôt international: PCT/IB2013/050053
(87) Numéro de publication internationale: WO 2013/102864

(56) Documents cités:
- WO-A1-03/076343

## Description

L'invention est relative à un appareil permettant de réaliser une coagulation floculation précédant une phase de séparation physique par flottation ou par filtration ou sur membranes en vue de la clarification des eaux (élimination des particules ou colloïdes en suspension).

L'invention est plus spécialement adaptée à la clarification par flottation qui n'exige pas de réaliser des flocs (agrégats de particules) aussi denses et aussi gros que ceux exigés par la décantation.

Le domaine d'application est celui de la clarification des eaux de surface, des eaux souterraines, des eaux de mer, des eaux résiduaires et industrielles, des eaux pluviales et généralement tous types d'eaux ou de suspensions liquides adaptées à la flottation, voire à la filtration ou à la séparation sur membranes qui exigent la même nature de flocs que la flottation.

Des appareils de ce type sont connus, notamment d'après le brevet français FR 2835247 ou le brevet EP 1483210 B1 déposés au nom de la société DEGREMONT.

Pour clarifier une eau, il est nécessaire de former un floc ou agglomérat de particules ou de colloïdes neutralisés. Ce floc pourra alors être séparé de la phase liquide soit par décantation grâce à sa vitesse de décantation, soit par flottation, suite à l'arrimage sur lui de microbulles, grâce à sa vitesse ascensionnelle. Pour l'homme du métier, la flottation est réservée à des eaux peu chargées généralement ayant des charges inférieures à 30 NTU ou 30g/m3 de matières en suspension.

Pour former un floc, il faut réaliser une coagulation puis une floculation.
La coagulation consiste en un ajout de réactif, le coagulant (en général des cations trivalents), notamment sels de fer ou d'aluminium, permettant la déstabilisation des particules colloïdales présentes dans l'eau et la neutralisation de toutes les charges électronégatives de ces particules. Au cours de cette étape, les particules neutralisées commencent à s'agglomérer pour former des microflocs. Ces microflocs sont trop petits pour décanter et même trop petits pour accrocher des microbulles.

La floculation, qui fait suite à la coagulation, est une étape destinée à faire grossir les flocs. Lors de cette étape, un adjuvant de floculation (polymère, généralement polymère de synthèse) est souvent injecté pour faire grossir et densifier les flocs. Cette injection de polymère est quasi systématique pour les décanteurs et, dans quelques conditions particulières, pour les flottateurs.

Pour être physiquement séparé de l'eau par décantation, un floc doit être dense et de préférence de grande taille. Par contre, pour être séparé par flottation, il suffit que ledit floc soit bien formé : il doit être léger et peut être de petite ou de grande taille.

Les phases de coagulation floculation sont réalisées pour la quasi totalité des cas dans des réacteurs de même type pour la décantation et la flottation.

Pour la décantation, on met en oeuvre généralement :
- un coagulateur d'un temps de séjour voisin de 1 minute avec une forte énergie volumique (50 à 200 W/m3),
- un floculateur en 1 ou 2 étapes (parfois 3) agitées par des hélices à forte composante axiale et à vitesse relativement lente, pour des temps de séjour globaux compris entre 15 et 30 minutes. Certains floculateurs plus sophistiqués sont agités par des hélices gainées et, ou équipées d'une recirculation de lest naturel (boues) ou ajouté (ballast ou sable). Dans ce dernier cas, les temps de séjour peuvent être plus faibles : 6 à 12 minutes. Pour obtenir des flocs à grande vitesse de décantation permettant de réduire la section de la zone de décantation, on injecte du polymère en tête du floculateur.

La floculation dite statique c'est-à-dire sans mobile d'agitation (bassin à déflecteurs ou à chicanes) a été utilisée autrefois devant des décanteurs à vitesse très lente avant l'apparition des polymères de synthèse.

Le décanteur proprement dit peut-être statique ou équipé d'un lamellaire pour réduire la section de décantation. Les boues décantées sont évacuées par le fond via ou non un racleur ou une trémie alors que l'eau clarifiée est évacuée en surface.

Pour la flottation, on trouve dans la plupart des cas les mêmes coagulateurs floculateurs :
- un coagulateur d'un temps de séjour voisin de 1 minute avec une forte énergie volumique (50 à 200 W/m3),
- un floculateur en 1 ou 2 étapes (parfois 3) agitées par des hélices à forte composante axiale et à vitesse relativement lente, pour des temps de séjour globaux compris entre 15 et 30 minutes. Certains floculateurs plus sophistiqués sont agités par des hélices gainées et, ou équipées d'une recirculation de lest naturel (boues) ou ajouté (ballast ou sable). Dans ce dernier cas, les temps de séjour peuvent être plus faibles : 6 à 12 minutes. Pour obtenir des flocs à grande vitesse de décantation permettant de réduire la section de la zone de décantation, on injecte du polymère en tête du floculateur.

La floculation dite statique c'est-à-dire sans mobile d'agitation (bassin à déflecteurs ou à chicanes) a été utilisée autrefois devant des décanteurs à vitesse très lente avant l'apparition des polymères de synthèse.

Le décanteur proprement dit peut-être statique ou équipé d'un lamellaire pour réduire la section de décantation. Les boues décantées sont évacuées par le fond via ou non un racleur ou une trémie alors que l'eau clarifiée est évacuée en surface.

Pour la flottation, on trouve dans la plupart des cas les mêmes coagulateurs floculateurs :
- un coagulateur d'un temps de séjour généralement inférieur ou égal à 1 minute avec une forte énergie volumique (50 à 200 W/m3)
- un floculateur en 1 ou 2 étapes agitées par des hélices à forte composante axiale et à vitesse relativement lente, voire très lente pour des temps de séjour globaux compris entre 15 et 30 minutes. Certains floculateurs plus sophistiqués comportent, comme dans le cas des décanteurs, des hélices gainées. Dans ce dernier cas, les temps de séjour sont parfois réduits et deviennent : 15 à 20 minutes. L'injection de polymère n'est pas nécessaire en flottation sauf dans les cas d'eaux très chargées ou très froides.
- un flottateur proprement dit en tête duquel l'eau floculée est mélangée avec une émulsion de microbulles de gaz, généralement de l'air, qui s'accrochent aux flocs et les font monter en surface où ils sont collectés et évacués alors que l'eau clarifiée est évacuée par le fond de l'appareil de flottation.

On voit donc que les phases de coagulation floculation sont réalisées dans la quasi totalité des cas dans des réacteurs de même type et quasiment de même volume quelle que soit la technologie de séparation, décantation ou flottation. Or la qualité recherchée pour les flocs n'est pas la même.

L'invention a pour but, surtout, de proposer un appareil de coagulation/ floculation adapté à un type de séparation physique autre que la décantation, notamment séparation par flottation ou par filtration ou sur membranes, qui permet de réduire le temps de séjour global de coagulation floculation, d'améliorer les performances et d'augmenter en particulier le champ d'application de la séparation par flottation.

Selon l'invention, un appareil de coagulation/floculation pour le traitement d'un flux hydraulique de tout type de liquide, en amont d'un élément de séparation physique, en particulier en amont d'un flottateur, ou d'une unité de filtration, notamment à membranes, lequel appareil comporte au moins un coagulateur avec injection de coagulant, suivi d'un floculateur, successivement traversés par le flux hydraulique, est caractérisé en ce que :
- le coagulateur comporte un réacteur d'injection de coagulant sous forte énergie, constitué d'un mélangeur en ligne adapté pour dissiper au moins 1000 W/m3, suivi d'un réacteur de coagulation non agité, équipé à sa sortie d'un déversoir suivi par :
- le floculateur, ledit floculateur étant statique et de type piston.

Avantageusement, le floculateur statique de type piston est de même largeur que l'élément de séparation physique situé en aval.

Avantageusement, le floculateur statique de type piston est un floculateur à chicanes.

Avantageusement, le réacteur d'injection de coagulant sous forte énergie est séparé du réacteur de coagulation.

Avantageusement, le déversoir induit une énergie volumique dans la zone supérieure du floculateur piston, comprise entre 20 et 100W/m3.

Avantageusement, le déversoir présente une hauteur de chute d'au moins 5 cm.

Avantageusement, le déversoir présente une hauteur de chute inférieure ou égale à 25 cm.

En pratique, le floculateur piston est à énergie volumique inférieure à 1 W/m3, de préférence inférieure à 0.3 W/m3.

L'invention est également relative à un procédé de mise en œuvre d'un appareil de coagulation/floculation tel que défini précédemment, pour le traitement d'un flux hydraulique de tout type de liquide, caractérisé en ce que le temps de séjour dans le réacteur de coagulation à basse énergie est inférieur à 1 minute. Le temps de séjour dans le réacteur de floculation de type piston est compris, de préférence, entre 2 et 8 minutes. Le temps de séjour dans le réacteur d'injection du coagulant, dans le cas d'un réacteur à cuve agitée, est compris entre 2 et 6 minutes, en fonction du type d'eau à traiter.

Ainsi, pour réaliser un appareil de coagulation/floculation compact et performant en flottation, l'invention propose de combiner les réacteurs ou équipements suivants:
- un réacteur d'injection du coagulant sous forte énergie,
- un réacteur de coagulation à basse énergie (non agité),
- un élément à forte énergie (déversoir) sur toute la largeur du floculateur,
- un floculateur statique de type piston de même largeur que le séparateur ou le flottateur d'où proviennent l'eau clarifiée et les boues.

Les résultats obtenus grâce à cette combinaison d'éléments sont surprenants. Le temps de séjour global de la floculation (3 à 8 minutes), et le temps global de la coagulation floculation (4 à 12 minutes) sont très nettement réduits par rapport aux temps de la coagulation floculation traditionnelle (16 à 31 minutes). Par ailleurs, la mise en œuvre de la floculation piston par rapport à la floculation agitée (hélice) a permis de façon surprenante de traiter des eaux chargées jusqu'à 200 ou 300 NTU alors que traditionnellement la limite est d'environ 30 NTU.

L'invention consiste, mises à part les dispositions exposées ci-dessus, en un certain nombre d'autres dispositions dont il sera plus explicitement question ci-après à propos d'exemples décrits avec référence aux dessins annexés, mais qui ne sont nullement limitatifs. Sur ces dessins :
Fig.1 est une coupe schématique verticale d'un appareil de coagulation/floculation selon l'invention, suivi d'un flottateur.
Fig.2 est une vue schématique de dessus de l'ensemble de Fig.1.
Fig.3 est une coupe schématique verticale d'une variante de l'appareil de coagulation/ floculation, avec variante pour le flottateur.
Fig.4 est une vue schématique de dessus de l'ensemble de Fig.3, et
Fig.5 est un diagramme comparant les performances de différents floculateurs pour l'élimination du phosphore.

L'appareil de coagulation/floculation de l'invention s'applique à tout type de flottateur, classique ou rapide. Il s'adapte préférentiellement à des flottateurs de section rectangulaire.

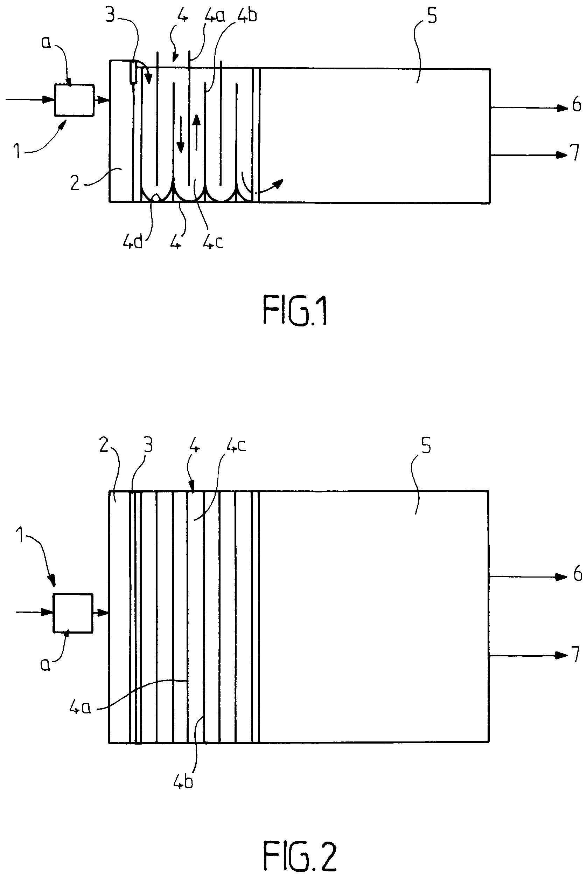

Comme illustré sur Fig.1 et 2, l'eau brute arrive, via un canal ou une tuyauterie, dans un réacteur 1 d'injection de coagulant. Suivant les applications, le coagulant a est injecté soit en ligne via un mélangeur statique (non représenté), soit dans le réacteur 1 d'injection de coagulant sous forte énergie, en tout cas supérieure à 40 W/m3. Dans ce dernier cas, particulier entre autres aux eaux de surface et de mer, le temps de séjour dans ce réacteur est au moins égal à 2 minutes. C'est un temps souhaité pour l'invention (condition d'une eau flottée de qualité), alors que les temps généralement pratiqués dans cette phase sont inférieurs ou voisins de la minute.

De préférence, le réacteur 1 d'injection de coagulant se trouve sous énergie supérieure à 40 W/m3, notamment comprise entre 40 W/m3 et 250 W/m3 pour un réacteur à cuve agitée et entre 200 W/m3 et 10 000 W/m3 dans le cas des mélangeurs en ligne. A la sortie de ce réacteur l'essentiel des colloïdes sont neutralisés et des microflocs apparaissent. L'énergie ou puissance par unité de volume correspond à celle dissipée par des moyens d'agitation, tels que des hélices, installés dans le réacteur ou des mélangeurs en ligne.

L'eau en cours de coagulation arrive dans un réacteur de coagulation 2 à basse énergie, de préférence inférieure à 10 W/m3, où les microflocs continuent d'apparaître et de s'agglomérer. L'objectif est d'avoir des microflocs qui commencent à être visibles à l'œil nu. Le temps de séjour dans ce réacteur 2 est inférieur à 1mn. Le réacteur de coagulation 2 est séparé du réacteur 1 d'injection de coagulant, ces réacteurs étant notamment réalisés sous forme de bassins ou cuves séparés. Le réacteur de coagulation 2 constitue une zone de transfert entre le réacteur 1 d'injection de coagulant et un floculateur piston 4.

En haut du réacteur 2, un déversoir 3 avec chute d'eau, d'une hauteur avantageusement comprise entre 5 et 25 cm, est positionné sur toute la largeur du floculateur piston 4. Une zone à forte énergie, créée par le déversoir 3, qui fait suite à la zone à basse énergie du réacteur 2, est surprenante pour un homme du métier qui normalement met en place des réacteurs à énergies décroissantes après le réacteur de coagulation à énergie maxi pour ne pas détruire les flocs déjà formés.

D'une manière inattendue, le déversoir 3 en aval du réacteur 2 à basse énergie permet des avancées hydrauliques et de procédé vis-à-vis du floculateur piston qui le suit. En variante, un tube perforé pourrait être installé à la place du déversoir 3.

L'énergie générée par le déversoir 3 (supérieure à 20 W/m3) sera utilisée avantageusement pour assurer le mélange du polymère s'il s'avérait nécessaire. Si le floc est cassé, il se reformera sous l'action du polymère. Cependant de façon surprenante, on a pu observer que même sans polymère le déversoir 3 ne provoquait pas de dégradation mais qu'au contraire il améliorait la qualité de l'eau traitée (voir l'exemple 2 fourni plus loin). Deux explications sont proposées. La première est que les microflocs ne sont pas encore assez gros pour être détruits mais sont assez petits pour bénéficier de cette énergie qui augmenterait leur probabilité de rencontre dans cette zone et donc leur chance d'agglomération et de grossissement. La seconde est apparue par mesure d'oxygène dissous. On a pu constater que ce déversoir augmentait la quantité d'air dissous dans l'eau. Or les eaux de surface sont souvent non saturées en oxygène, et de ce fait les microbulles d'air injectées pour faire flotter les flocs sont en partie consommées par l'eau non saturée. Cette chute d'eau juste avant la flottation favorise donc la clarification par augmentation effective des microbulles opérantes.

Le déversoir 3 permet également de répartir le flux hydraulique sur toute la largeur du floculateur piston 4. Une bonne répartition sur toute la largeur du floculateur est une condition favorable à l'écoulement piston dans le floculateur.

En conclusion, le déversoir 3 permet de répartir le flux hydraulique sur toute la largeur du floculateur piston 4, d'injecter si nécessaire du polymère sans rajouter un réacteur spécifique, de dissoudre de l'air laissant ainsi plus de microbulles opérantes et enfin, précédé d'un réacteur basse énergie 2, le déversoir 3 favorise la formation des microflocs.

L'eau coagulée alimente maintenant en partie haute, dans de parfaites conditions, le floculateur piston 4.

On rappellera que l'objectif de la floculation, en vue d'une séparation physique notamment par flottation, est de faire grossir un minimum les flocs sans pour autant les densifier comme on cherche à le faire en décantation. Selon l'invention, on prévoit le floculateur piston 4 qui constitue un réacteur basse énergie, à énergie inférieure à 1 W/m3, généralement inférieure à 0.3 W/m3, avec une distribution la plus homogène possible pour éviter les courts-circuits et permettre à tous les flocs entrant d'avoir le même temps de séjour pour avoir ainsi une taille homogène en sortie de floculateur. C'est ainsi que la mise en place du floculateur statique 4 de type piston permet d'obtenir de très bonnes performances avec des temps de séjour très courts (3 à 8 minutes) suivant les applications et les températures de l'effluent à traiter.

Le floculateur statique 4 de type piston est préférentiellement un réacteur à chicanes constituées de plaques alternées 4a et 4b verticales, parallèles au déversoir 3 et à la zone d'alimentation basse du flottateur 5 proprement dit. Les plaques s'étendent suivant toute la largeur du réacteur. Les plaques 4a ont leur bord supérieur situé au-dessus du niveau de l'eau, tandis que leur bord inférieur est distant du radier pour ne laisser au liquide qu'un passage inférieur. Les plaques 4b s'étendent jusqu'au radier et s'arrêtent au-dessous, à distance, du niveau de l'eau pour ne laisser au liquide qu'un passage supérieur. Ces plaques contraignent le courant à réaliser successivement des mouvements descendants et ascendants dans chacune des cellules 4c formées par les plaques 4a et 4b.

Les espaces entre plaques 4a, 4b, et entre les plaques hautes 4a et le radier, sont tels que les vitesses hydrauliques sont supérieures aux vitesses de décantation des particules les plus lourdes et aux vitesses d'arrachement de la boue formée par les flocs décantés sur les radiers de chaque cellule 4c. L'auto-curage limite ainsi les dépôts sur les radiers. Le profil incurvé 4d, concave vers le haut, des radiers des cellules réduit encore les dépôts et favorise légèrement l'écoulement piston.

A la sortie du floculateur piston 4, en partie basse, les vitesses d'approche du flottateur 5 sont très faibles et parfaitement homogènes. C'est sans doute ce qui explique les étonnants résultats obtenus sur le traitement des eaux chargées. En effet, comme il apparaîtra dans les exemples donnés plus loin (voir exemple 3), le floculateur piston permet de traiter des effluents chargés alors que les résultats sont très dégradés quand on utilise des floculateurs agités (fortes vitesses locales et mouvement de rotation). Il convient de préciser qu'avec des eaux chargées (surtout en matières minérales) les boues flottées sont très fragiles donc sensibles aux turbulences qui peuvent les faire tomber.

En conclusion, le floculateur statique 4 de type piston à chicanes, alimenté de façon homogène avec des microflocs homogènes permet une floculation très compacte et une vitesse d'approche du flottateur homogène et très faible.

Le floculateur statique à piston peut avoir des plaques de plus en plus espacées pour réduire les vitesses à l'approche du flottateur.

Le flottateur 5 proprement dit peut être un flottateur classique avec des vitesses comprises entre 6 à 15 m/h sur la zone de flottation ou un flottateur rapide avec des vitesses de 20 à 60 m/h. Les qualités et la compacité de l'appareil de coagulation/floculation de l'invention augmentent encore la compétitivité et l'attractivité actuelles des flottateurs rapides. L'alimentation en eau du flottateur, depuis le floculateur 4, s'effectue par un passage situé en partie basse et s'étendant sur toute la largeur.

L'eau clarifiée sort en 6 (Fig 1 et 2), généralement en partie basse. Les boues, récupérées à la surface du flottateur, sont évacuées en 7 (Fig 1 et 2).

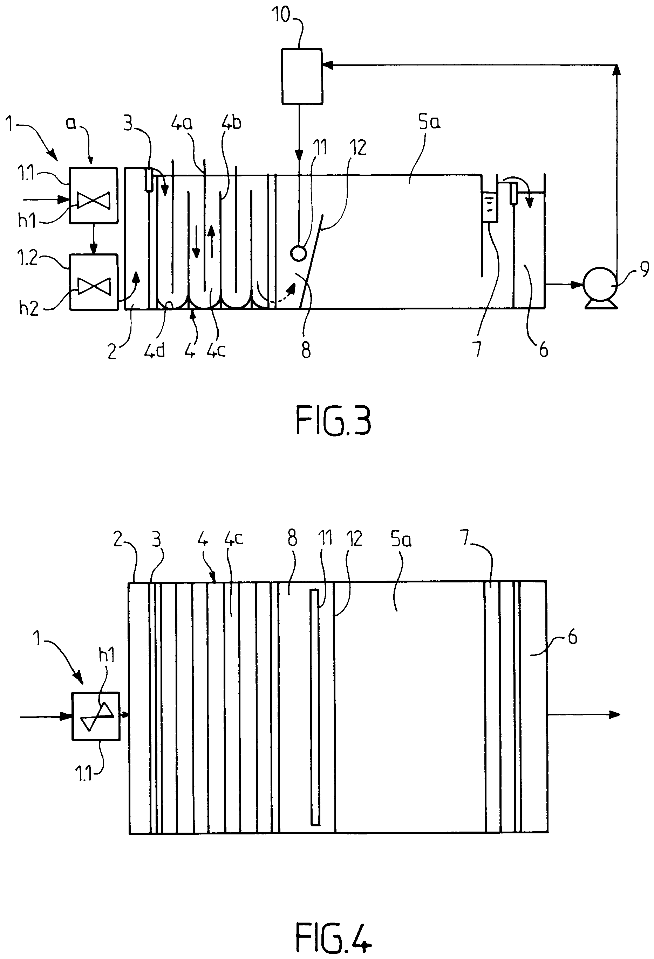

Fig. 3 et 4 montrent une variante de réalisation de l'appareil. Le réacteur d'injection de coagulant est constitué de deux réacteurs en série 1.1 et 1.2, sous forte énergie chacun, avec hélice h1, h2 d'agitation. Avantageusement, chaque réacteur d'injection de coagulant 1.1 et 1.2 est sous énergie comprise entre 40 et 250W/m3.

Le réacteur de coagulation 2 et le floculateur piston 4 sont semblables à ceux de Fig.1 et 2. L'eau brute floculée est amenée au travers d'un passage d'alimentation dans une zone inférieure 8 du flottateur 5a. Un courant ascendant est créé avec des microbulles produites par un système de pressurisation-détente comportant une pompe 9 recyclant une fraction de l'eau clarifiée vers un ballon de pressurisation 10. L'eau pressurisée est injectée et détendue par une buse 11 en partie basse. La zone 8 de mélange est séparée de la zone de flottation proprement dite par un déversoir incliné 12 partant du radier, penché vers l'aval, et s'arrêtant à distance au-dessous du niveau supérieur de l'eau. Les matières en suspension entraînées par les microbulles s'accumulent en surface, et sont évacuées vers l'aval par une rigole transversale constituant la sortie 7 des boues. L'eau clarifiée est évacuée d'une cellule aval reliée à la sortie 6 et à l'aspiration de la pompe 9.

### Exemples

Plusieurs séries d'essais ont été réalisées sur différents types d'eau (traitement tertiaire d'eaux résiduaires, traitement d'eau de mer et traitement d'eau de rivière chargée).

Suivant les cas, les essais ont été effectués sur 1 ou 2 mini unités industrielles (ou pilotes) mises en parallèle.
Les pilotes ont une capacité de 24 m3/h et permettent de réaliser les étapes de coagulation, de floculation et de clarification par flottation (section du flottateur 0.8 m2). Ces étapes, ou les éléments du pilote, sont modulables et permettent de changer les étapes du traitement, de mettre en place différents types de réacteurs et de faire varier les volumes des réacteurs. Les microbulles sont générées par un système de pressurisation détente comprenant un ballon de pressurisation sous 5 bars relié à un système de détente assurant la formation de microbulles d'un diamètre d'environ 40µm (40 micromètres). Le taux de recirculation dans la pressurisation est d'environ 10%.

### Première série d'essais

Une première série d'essais a été réalisée sur une eau résiduaire sortie d'un traitement biologique pour réaliser un traitement final d'élimination du Phosphore (traitement tertiaire). L'objectif est de tester différents réacteurs de floculation sur une eau à turbidité relativement constante et où la cinétique d'élimination du Phosphore est bien maîtrisée.

Cette eau coagule facilement. La version de base s'est avérée efficace : le coagulant est injecté par un mélangeur en ligne à forte énergie, d'au moins 1000 W/m3, l'eau à traiter passe ensuite par le réacteur non agité équipé à sa sortie d'un déversoir, puis enfin par le réacteur de floculation proprement dit suivi du même flottateur.

Les réacteurs de floculation testés avec leur temps de séjour ont été :
réacteur statique à déflecteurs, temps de séjour 8 minutes,
réacteur agité, temps de séjour 8 minutes (2 cuves en série avec agitateurs à hélices),
réacteur statique piston à chicanes, temps de séjour successivement 3, 4.5 et 7.5 minutes.

Les caractéristiques de l'eau brute sont :
Turbidité de l'eau brute EB = 5 à 10 NTU
Matières en suspension dans l'eau brute EB = 7 à 15 g/m3
Phosphore total eau brute EB: entre 0.5 et 7 g/m3
Débit traité : 24 m3/h
Réactifs : coagulant (FeCl3) 50g/m3, polymère=0

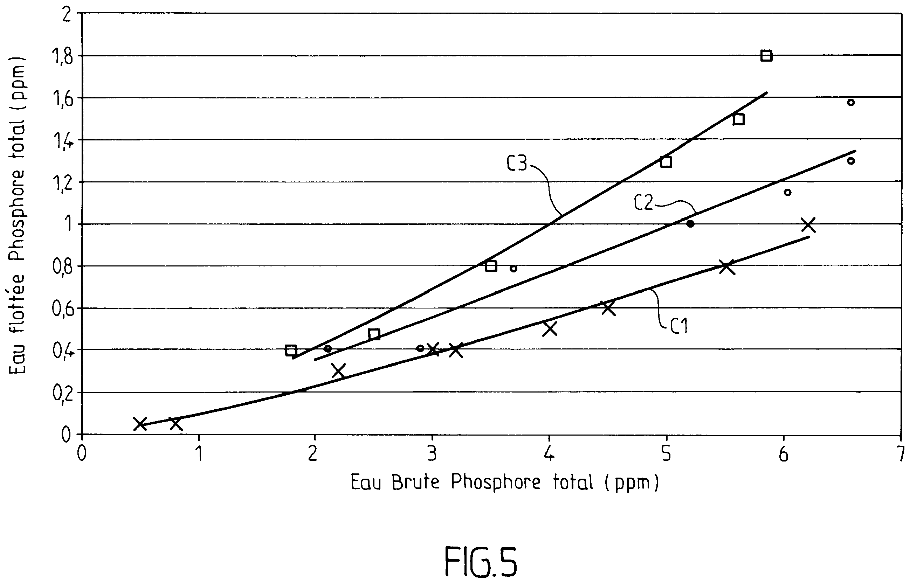

Les résultats sont portés sur le diagramme de Fig.5. Ils expriment le phosphore dans l'eau flottée (ppm ou g/m3) porté en ordonnée, en fonction du phosphore de l'eau brute (ppm ou g/m3), porté en abscisse, pour les différents types de réacteurs mentionnés.

Les meilleurs résultats, illustrés par la courbe C1, sont obtenus avec le réacteur de floculation statique piston à chicanes, selon l'invention, quelque soit le temps de séjour supérieur à 3 minutes.

Le floculateur agité (8 minutes) donne des résultats assez proches, illustrés par la courbe C2, mais plus dispersés pour un temps de séjour plus important.

L'autre réacteur statique à déflecteurs, donc non piston, donne des résultats moins bons, illustrés par la courbe C3 (dans ce type de réacteur les courts-circuits sont très importants). Par ailleurs les boues de fond apparaissent très vite du fait de l'absence de balayage de fond.

En conclusion, dans cette application le floculateur de type piston est retenu. On pense que ce floculateur de type piston réduit, ou supprime, les courts-circuits, ce qui favorise les réactions d'élimination du phosphore.

### Seconde série d'essais

Une seconde série d'essais a été réalisée sur une eau de mer et avec le même pilote.

L'eau de mer est plus difficile à coaguler. Le coagulant est injecté à l'entrée d'un réacteur d'injection de coagulant, avec temps de séjour de 3 minutes, suivi d'une zone sans agitation de moins d'1 minute formant réacteur de coagulation, suivie ou non d'un déversoir (chute d'eau 10cm) et du réacteur de floculation qui est celui défini dans l'exemple précédent avec un temps de floculation de 6 minutes.
Les caractéristiques de l'eau brute sont :
Turbidité de l'eau brute EB = 1 à 15 NTU
Débit traité : 24 m3/h
Réactifs : coagulant (FeCl3) 10g/m3, polymère=0

La configuration donne satisfaction. Mais l'essai qui nous intéresse ici est l'impact ou non du déversoir sur la qualité de l'eau flottée alors qu'aucun polymère n'est injecté sur le déversoir.

Les résultats sont les suivants :

| Eau de mer (NTU) | Eau flottée (NTU) | |
|---|---|---|
| | Sans déversoir | Avec déversoir |
| 1.6 | 0.7 | 0.7 |
| 2 | 0.9 | 0.95 |
| 2.9 | 1.5 | 1.2 |
| 5 | 2. | 1.5 |
| 7.2 | 2.5 | 1.9 |
| 10 | 3.4 | 2.1 |
| 13.3 | 3.7 | 2.3 |

L'essai montre que l'effet positif du déversoir est net et de façon inattendue dés que la turbidité de l'eau de mer augmente, ici au-delà de 3 NTU environ.
Dans des conditions de floculation difficiles, le déversoir 3 a un effet favorable à la clarification par flottation.

### Troisième série d'essais

Une troisième série d'essais a été réalisée sur une eau de rivière et sur le même pilote
Appliquée au traitement des eaux de surface (rivière ou souterraine) la configuration s'est avérée très performante. La limitation des applications de la flottation par rapport à la décantation, tient à ce que la flottation ne peut normalement traiter des eaux dont les turbidités sont supérieures à 30 NTU voire 50 NTU. Les essais rapportés ici ont pour objectif de valider le meilleur floculateur pour traiter les eaux chargées (50 à 300 NTU). Pour ces essais les 2 lignes pilotes sont mises en parallèle.

Les deux technologies comparées ont été,
- un réacteur de floculation agité : 2 réacteurs de floculation en série (2 cuves en série avec agitateurs à hélices) avec 12 minutes de temps de séjour.
- un réacteur de floculation statique piston à chicanes avec un temps de séjour de 5 minutes

Pour les 2 configurations, le coagulant est injecté par un mélangeur en ligne à l'entrée d'un réacteur d'injection de coagulant de temps de séjour de 3 minutes suivi d'une zone sans agitation (constituant le réacteur de coagulation 2) de moins d'1 minute, d'un déversoir et d'un des 2 réacteurs de floculation. Le flottateur est toujours le même et le débit appliqué sur chacune des 2 lignes pilotes est compris entre 16 et 24 m3/h.

Les caractéristiques des essais sont les suivantes :
Turbidité de l'eau brute EB = 10 à 250 NTU (température 5 à 7° C)
Débit traité : 24 m3/h et réduit à 16 m3/h pour les turbidités supérieures à 100 NTU
Réactifs : coagulant (FeCl3) 30 à 40 g/m3, polymère=0.2 à 0.4 g/m3 suivant la turbidité de l'eau brute (inférieure ou supérieure à 50 NTU).

| Eau de rivière (NTU) | Eau flottée (NTU) | |
|---|---|---|
| | Floculateur agité | FLoculateur piston |
| 12 | 1.6 | 1.55 |
| 28 | 5.3 | 3.5 |
| 42 | 8 | 5.3 |
| 45 | 7.5 | 5 |
| 61 | 15 | 6 |
| 73 | 25 | 6.3 |
| 80 | 19 | 5.7 |
| 90 | 42 | 6.4 |
| 105 | 43 | 5.5 |
| 153 | 62 | 8.7 |
| 208 | 87 | 7.8 |
| 242 | 96 | 10.3 |

Jusqu'à 50 NTU, les 2 types de floculateur ont des performances assez proches. Au-delà, la turbidité de l'eau flottée est d'environ 2 à 10 fois supérieure à celle du floculateur piston. En conclusion, pour traiter de fortes turbidités en flottation, le floculateur statique piston sans énergie donne des résultats très supérieurs. En outre le floculateur statique piston est relativement moins encombrant, et il consomme moins d'énergie.

### Autres applications

- Pour des traitements plus délicats (eau de mer,...) ou pour les eaux chargées ou pour généralement apporter plus de souplesse et d'efficacité, on peut réaliser l'étape d'injection de coagulant en 2 réacteurs agités 1.1 et 1.2 en série (Fig. 3 et 4). Ceci permet par exemple de déplacer l'injection de polymère dans le second réacteur au lieu de l'injecter sur le déversoir 3. Par ailleurs cette configuration permet de réaliser la double injection de coagulant décrite dans le brevet français n° 2 909 993 (06 10866 déposé le 13/12/2006). Une première injection de coagulant dans le réacteur d'injection de coagulant, l'injection de polymère dans le réacteur de coagulation non agité et la seconde injection de coagulant sur le déversoir 3.
- L'appareil de coagulation/floculation de l'invention pourrait être utilisé devant un filtre ou des membranes où l'on cherche, comme devant un flottateur, à filtrer des flocs formés, légers et non colmatants (spécialement sans polymère),
- L'appareil de coagulation/floculation de l'invention pourrait éventuellement être utilisé devant un décanteur, à condition d'adapter les temps de floculation (plus longs), d'avoir un objectif de réduction d'énergie consommée et enfin d'accepter de travailler sur le décanteur à des vitesses plus faibles (appareils plus grands).

## Revendications

1. Appareil de coagulation/floculation pour le traitement d'un flux hydraulique de tout type de liquide, en amont d'un élément de séparation physique, en particulier en amont d'un flottateur, ou d'une unité de filtration, notamment à membranes, lequel appareil comporte au moins un coagulateur avec injection de coagulant, suivi d'un floculateur, successivement traversés par le flux hydraulique, **caractérisé en ce que** :
- le coagulateur comporte un réacteur (1) d'injection de coagulant sous forte énergie constitué d'un mélangeur en ligne adapté pour dissiper au moins 1000 W/m3, suivi d'un réacteur de coagulation (2) non agité, équipé à sa sortie d'un déversoir suivi par :
- le floculateur, ledit floculateur étant statique et de type piston (4).

2. Appareil selon la revendication 1, **caractérisé en ce que** le floculateur statique de type piston (4) est de même largeur que l'élément de séparation physique (5) situé en aval.

3. Appareil selon la revendication 1 ou 2, **caractérisé en ce que** le floculateur statique de type piston (4) est un floculateur à chicanes (4a, 4b).

4. Appareil selon l'une des revendications 1 à 3, **caractérisé en ce que** le réacteur (1) d'injection de coagulant sous forte énergie est séparé du réacteur de coagulation (2).

5. Appareil selon l'une quelconque des revendications précédentes, **caractérisé en ce que** le déversoir induit une énergie volumique dans la zone supérieure du floculateur piston (4), comprise entre 20 et 100W/m3.

6. Appareil selon l'une quelconque des revendications précédentes, **caractérisé en ce que** le déversoir (3) présente une hauteur de chute d'au moins 5 cm.

7. Appareil selon la revendication 6, **caractérisé en ce que** le déversoir (3) présente une hauteur de chute inférieure ou égale à 25 cm.

8. Appareil selon l'une quelconque des revendications précédentes, **caractérisé en ce que** le floculateur piston (4) est à énergie volumique inférieure à 1 W/m3, de préférence inférieure à 0.3 W/m3.

9. Procédé de mise en œuvre d'un appareil de coagulation/floculation selon l'une quelconque des revendications précédentes, pour le traitement d'un flux hydraulique de tout type de liquide, **caractérisé en ce que** le temps de séjour dans le réacteur de coagulation à basse énergie (2) est inférieur à 1 minute.

10. Procédé selon la revendication 9, **caractérisé en ce que** le temps de séjour dans le réacteur de floculation (4) de type piston est compris entre 2 et 8 minutes

11. Procédé de mise en œuvre d'un appareil de coagulation/floculation selon la revendication 9 ou 10, **caractérisé en ce que** le temps de séjour dans le réacteur (1) d'injection du coagulant, dans le cas d'un réacteur à cuve agitée, est compris entre 2 et 6 minutes, en fonction du type d'eau à traiter.

## Patentansprüche

1. Gerinnungs-/Flockungsvorrichtung zur Behandlung eines hydraulischen Flusses jeder Art von Flüssigkeit, stromaufwärts eines Elements zur physikalischen Trennung, insbesondere stromaufwärts einer Flotationsvorrichtung, oder einer Filtriereinheit, insbesondere mit Membranen, wobei die Vorrichtung mindestens einen Koagulator mit Koagulationsmitteleinspritzung, gefolgt von einem Flockulator, die nacheinander von dem hydraulischen Fluss durchquert werden,aufweist, **dadurch gekennzeichnet, dass**:
- der Koagulator einen Reaktor (1) zum Einspritzen von Koagulationsmittel mit hoher Energie, gebildet durch einen In-Line-Mischer, der geeignet ist, mindestens 1000 W/m³ abzuleiten, gefolgt von einem nicht gerührten Koagulationsreaktor (2), der an seinem Auslass mit einem Überlauf versehen ist, welchem folgt:
- der Flockulator, wobei der Flockulator statisch und vom Kolbentyp (4) ist.

2. Vorrichtung nach Anspruch 1, **dadurch gekennzeichnet, dass** der statische Flockulator vom Kolbentyp (4) dieselbe Breite aufweist wie das stromabwärts befindliche Element zur physikalischen Trennung (5).

3. Vorrichtung nach Anspruch 1 oder 2, **dadurch gekennzeichnet, dass** der statische Flockulator vom Kolbentyp (4) ein Flockulator mit Ablenkeinrichtungen (4a, 4b) ist.

4. Vorrichtung nach einem der Ansprüche 1 bis 3, **dadurch gekennzeichnet, dass** der Reaktor (1) zum Einspritzen von Koagulationsmittel mit hoher Energie von dem Koagulationsreaktor (2) getrennt ist.

5. Vorrichtung nach einem der vorhergehenden Ansprüche, **dadurch gekennzeichnet, dass** der Überlauf eine Energiedichte zwischen 20 und 100W/m³ in die obere Zone des Kolbenflockulators (4) einleitet.

6. Vorrichtung nach einem der vorhergehenden Ansprüche, **dadurch gekennzeichnet, dass** der Überlauf (3) eine Fallhöhe von mindestens 5 cm aufweist.

7. Vorrichtung nach Anspruch 6, **dadurch gekennzeichnet, dass** der Überlauf (3) eine Fallhöhe von weniger als oder gleich 25 cm aufweist.

8. Vorrichtung nach einem der vorhergehenden Ansprüche, **dadurch gekennzeichnet, dass** der Kolbenflockulator (4) eine Energiedichte von weniger als 1 W/m³, vorzugsweise weniger als 0,3 W/m³ aufweist.

9. Verfahren zum Betreiben einer Gerinnungs-/Flockungsvorrichtung nach einem der vorhergehenden Ansprüche, zur Behandlung eines hydraulischen Flusses jeder Art von Flüssigkeit, **dadurch gekennzeichnet, dass** die Verweildauer in dem Niederenergie-Koagulationsreaktor (2) unter 1 Minute beträgt.

10. Verfahren nach Anspruch 9, **dadurch gekennzeichnet, dass** die Verweildauer in dem Kolbenflockulator (4) zwischen 2 und 8 Minuten beträgt.

11. Verfahren zum Betreiben einer Gerinnungs-/Flockungsvorrichtung nach Anspruch 9 oder 10, **dadurch gekennzeichnet, dass** die Verweilzeit in dem Reaktor (1) zum Einspritzen von Koagulationsmittel im Falle eines Reaktors mit Rührbehälter in Abhängigkeit von der Art des zu behandelnden Wassers zwischen 2 und 6 Minuten beträgt.

## Claims

1. A coagulation/flocculation apparatus for the treatment of a hydraulic flow of any type of liquid, upstream of a physical separation element, in particular upstream of a flotation unit, or of a filtration unit, in particular a membrane filtration unit, which apparatus comprises at least one coagulator with injection of coagulant, followed by a flocculator, which are successively passed through by the hydraulic flow, **characterized in that**:
- the coagulator comprises a high-energy coagulant injection reactor (1) being an in-line mixer, suitable for dissipating at least 1000W/m³, followed by a non-stirred coagulation reactor (2),
- a high-energy intermediate element (3) is positioned between the coagulation reactor (2) and the flocculator (4), equipped at its outlet with a weir, followed by the flocculator, said flocculator being static and of plug-flow type (4).

2. The apparatus as claimed in claim 1, **characterized in that** the static flocculator of plug-flow type (4) has the same width as the physical separation element (5) located downstream.

3. The apparatus as claimed in claim 1 or 2, **characterized in that** the static flocculator of plug-flow type (4) is a baffle flocculator (4a, 4b).

4. The apparatus as claimed in one of claims 1 to 3, **characterized in that** the high-energy coagulant injection reactor (1) is separated from the coagulation reactor (2).

5. The apparatus as claimed in any one of the preceding claims, med in claim 5, **characterized in that** the weir induces an energy per unit volume in the upper zone of the plug-flow flocculator (4), between 20 and 100 W/m³.

6. The apparatus as claimed in any one of the preceding claims, **characterized in that** the weir (3) has a fall head of at least 5 cm.

7. The apparatus as claimed in claim 6, **characterized in that** the weir (3) has a fall head of less than or equal to 25 cm.

8. The apparatus as claimed in any one of the preceding claims, **characterized in that** the plug-flow flocculator (4) is at an energy per unit volume of less than 1 W/m³, preferably less than 0.3 W/m³.

9. A process for implementing a coagulation/flocculation apparatus as claimed in any one of the preceding claims, for the treatment of a hydraulic flow of any type of liquid, **characterized in that** the residence time in the low-energy coagulation reactor (2) is less than 1 minute.

10. The process as claimed in claim 9, **characterized in that** the residence time in the plug-flow type flocculation reactor (4) is between 2 and 8 minutes.

11. A process for implementing a coagulation/flocculation apparatus as claimed in claim 9 or 10, **characterized in that** the residence time in the coagulant injection reactor (1), in the case of a stirred tank reactor, is between 2 and 6 minutes, depending on the type of water to be treated.
